# EUROPÄISCHE PATENTSCHRIFT

(11) **EP 4 310 539 B1**
(45) Veröffentlichungstag und Bekanntmachung des Hinweises auf die Patenterteilung: **19.03.2025**
(21) Anmeldenummer: 23180884.1
(22) Anmeldetag: 22.06.2023
(51) Int. Cl.: G01S 7/481, G01S 17/42, A47L 9/28, A47L 9/10

(54) **VERFAHREN ZUM BETRIEB EINES MOBILEN, SELBSTFAHRENDEN GERÄTS**
METHOD FOR OPERATING A MOBILE SELF-PROPELLED DEVICE
PROCÉDÉ DE FONCTIONNEMENT D'UN ENGIN MOBILE AUTOMOTEUR

(30) Priorität: 21.07.2022 DE 102022207500
(43) Veröffentlichungstag der Anmeldung: 24.01.2024
(73) Patentinhaber: BSH Hausgeräte GmbH, 81739 München (DE)
(72) Erfinder: Schnitzer, Frank, 97616 Bad Neustadt (DE); Hassfurter, Stefan, 96126 Maroldsweisach (DE); Gnielka, Katja, 81371 München (DE)

(56) Entgegenhaltungen:
- CN-A- 109 276 193
- US-A1- 2017 332 864
- US-A1- 2018 299 899

## Beschreibung

Die Erfindung betrifft ein Verfahren zum Betrieb eines mobilen, selbstfahrenden Geräts, insbesondere Bodenreinigungsgeräts, wie einen Saug- und/oder Kehrroboter, mit einer Detektionseinrichtung.

Mobile, selbstfahrende Geräte, wie beispielsweise Saugroboter, haben die Aufgabe, autonom möglichst eine gesamte Bodenfläche zu reinigen. Meist sind derartige Saugroboter mit einem Staubsammelbehälter ausgerüstet, in dem der aufgesaugte Schmutz und Staub gesammelt wird. Mit einem derartigen Staubsammelbehälter ist es zwingend erforderlich, dass der Nutzer regelmäßig diesen Staubsammelbehälter leert, damit der Saugroboter mit voller Saugleistung arbeiten beziehungsweise relevanten Schmutz aufsaugen kann. Hierzu weist der Saugroboter auf seiner Oberseite über dem Staubsammelbehälter ein Abdeckelement auf. Um den Staubsammelbehälter aus dem Saugroboter entnehmen und entleeren zu können, öffnet ein Nutzer das Abdeckelement, indem dieses in eine im Wesentlichen senkrechte Stellung zum Saugroboter gebracht wird, um auf diese Weise einen Zugriff auf den Staubsammelbehälter zu ermöglichen. Nach dem Entleeren und/oder Säubern des Staubsammelbehälters wird dieser vom Nutzer wieder in den Saugroboter eingesetzt und das Abdeckelement geschlossen, indem dieses in seine im Wesentlichen horizontale Stellung heruntergeklappt wird.

Nachteilig hierbei ist, dass der Nutzer nach dem Einsetzen des Staubsammelbehälters vergessen kann, das Abdeckelement wieder zu schließen. Das geöffnete Abdeckelement schränkt einen Sichtbereich einer Detektionseinrichtung jedoch stark ein und verhindert, dass Hindernisse vor oder hinter dem Saugroboter erkannt und detektiert werden können. Dadurch steigt die potenzielle Gefahr von Navigationsfehlern und Kollisionen mit nicht detektierten Hindernissen.

Bekannte Lösungen umfassen Sensoren, die die offene Stellung des Abdeckelements detektierten und den Nutzer beispielsweise mittels einer Sprachausgabe darauf hinweisen. Sobald der Saugroboter mittels dieser Sensoren ein offenes Abdeckelement erkennt, startet dieser nicht mehr zu Reinigungsfahrten, sondern wartet auf ein Eingreifen des Nutzers, um das Abdeckelement manuell schließen zu lassen. Eine weitere Lösung ist zum Beispiel aus der US 2017/332864 A1 bekannt.

Aufgabe der Erfindung ist es, ein möglichst autonomes und insbesondere selbstständiges Betriebsverfahren eines mobilen, selbstfahrenden Geräts bereitzustellen, bei dem insbesondere ein möglichst geringer Nutzereingriff notwendig ist.

Diese Aufgabe wird durch ein Verfahren zum Betrieb eines mobilen, selbstfahrenden Geräts, insbesondere Bodenreinigungsgeräts zur autonomen Bearbeitung von Bodenflächen, mit den Merkmalen des Anspruchs 1 gelöst. Vorteilhafte Ausgestaltungen und Weiterbildungen sind Gegenstand der Unteransprüche.

Erfindungsgemäß wird bei einem Verfahren zum Betrieb eines mobilen, selbstfahrenden Geräts, insbesondere Bodenreinigungsgeräts, wie ein Saug- und/oder Kehr- und/oder Wischroboter, eine zur Navigation vorgesehene Detektionseinrichtung eingesetzt, ein auf einem Gerätegehäuse des mobilen, selbstfahrenden Geräts angeordnetes Abdeckelement als offen oder geschlossen zu ermitteln, wobei das mobile, selbstfahrende Gerät bei einem offenen Abdeckelement ein Fahrmanöver zum selbstständigen Schließen des Abdeckelements durchführt.

Vorliegend wird die zur Navigation vorgesehene Detektionseinrichtung also zusätzlich dazu genutzt, eine Stellung des Abdeckelements zu ermitteln, um entsprechend dem Ermittlungsergebnis vorgesehene Schritte durchzuführen. Eine zusätzliche Sensorik zum Bestimmen der Stellung des Abdeckelements ist vorteilhafterweise nicht notwendig. Diese eingesparte Sensorik wirkt sich mit Vorteil positiv auf den Herstellungspreis, die Komplexität des Systems und die Montagezeit des mobilen, selbstfahrenden Geräts aus.

Das mobile, selbstfahrende Gerät nutzt also keinen extra verbauten Sensor, um festzustellen, ob das Abdeckelement über dem Staubsammelbehälter vom Nutzer offengelassen wurde, sondern setzt stattdessen die ohnehin verbaute Detektionseinrichtung ein. Das mobile, selbstfahrende Gerät kann so selbstständig ein offenes Abdeckelement detektieren, ohne dedizierte Sensoren verwenden zu müssen.

Wird mittels der Detektionseinrichtung ein offenes Abdeckelement erkannt, führt das mobile, selbstfahrende Gerät selbstständig und insbesondere automatisch ein Fahrmanöver durch, mit dem ohne Zutun des Nutzers versucht wird, das Abdeckelement zu schließen. Insbesondere werden Fahrantriebe des mobilen, selbstfahrenden Geräts genutzt und das mobile, selbstfahrende Gerät so in die Lage versetzt, das Abdeckelement eigenständig zu schließen. Hierzu findet beispielsweise ein schnelles Beschleunigungsmanöver Anwendung. Neben dem reinen Detektieren des offenen Abdeckelements ist das Gerät also in der Lage, dieses auch selbstständig und autonom zu schließen, ohne ein Nutzerzutun notwendig werden zu lassen.

Unter einem mobilen, selbstfahrenden Gerät ist insbesondere ein Bodenreinigungsgerät, beispielsweise Reinigungsgerät, zu verstehen, welches insbesondere im Haushaltsbereich Bodenflächen autonom bearbeiten. Hierunter zählen unter anderem Saug-, Wisch- und/oder Kehrroboter wie beispielsweise Staubsaugerroboter. Diese Geräte arbeiten im Betrieb (Reinigungsbetrieb) bevorzugt ohne oder mit möglichst wenig Nutzereingriff. Beispielsweise fährt das Gerät selbsttätig in einen vorgegebenen Raum, um entsprechend einer vorgegebenen und einprogrammierten Verfahrensstrategie den Boden zu reinigen.

Unter der zu bearbeitenden Bodenfläche ist jegliche zu reinigende Raumfläche zu verstehen. Hierunter fallen unter anderem auch Teilbereiche einzelner Räume, einzelne Flächen einer Wohnung, einzelne Räume einer Wohnung und/oder die gesamte Bodenfläche der vollständigen Wohnung beziehungsweise des Wohnraums.

Um hierbei jegliche individuellen Umgebungsbesonderheiten beachten zu können, findet bevorzugt eine Explorationsfahrt mit dem mobilen, selbstfahrenden Gerät statt. Unter einer Explorationsfahrt ist insbesondere eine Erkundungsfahrt zu verstehen, die dazu geeignet ist, eine zu bearbeitende Bodenfläche nach Hindernissen, Raumaufteilung und ähnlichem zu erkunden. Ziel einer Explorationsfahrt ist es insbesondere, Gegebenheiten des zu bearbeitenden Bodenbearbeitungsbereich einschätzen und/oder darstellen zu können.

Nach der Explorationsfahrt kennt das mobile, selbstfahrende Gerät seine Umgebung und kann diese in Form einer Umgebungskarte an den Nutzer weitergeben, zum Beispiel in einer App an einem Mobilgerät. In der Umgebungskarte kann dem Nutzer die Möglichkeit gegeben werden, mit dem mobilen, selbstfahrenden Gerät zu interagieren. Der Nutzer kann mit Vorteil Informationen in der Umgebungskarte einsehen und bei Bedarf ändern und/oder anpassen.

Unter einer Umgebungskarte ist insbesondere jegliche Karte zu verstehen, die geeignet ist, die Umgebung des Bodenbearbeitungsbereichs mit all seinen Hindernissen und Gegenständen darzustellen. Beispielsweise zeigt die Umgebungskarte den Bodenbearbeitungsbereich mit den darin enthaltenen Möbeln und Wänden skizzenartig an.

Unter Hindernisse sind jegliche Objekte und/oder Gegenstände zu verstehen, die in einem Bodenbearbeitungsbereich angeordnet sind, beispielsweise dort liegen oder stehen, und die Bearbeitung durch das mobile, selbstfahrende Gerät beeinflussen, insbesondere behindern und/oder stören, wie beispielsweise Möbel, Wände, Vorhänge, Teppiche und ähnliches.

Die Umgebungskarte mit den Hindernissen wird vorzugsweise in der App an einem tragbaren Zusatzgerät dargestellt. Dies dient insbesondere der Visualisierung zu einer möglichen Interaktion für den Nutzer.

Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere extern und/oder differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist insbesondere die App, insbesondere eine Reinigungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder der zu reinigenden Wohnung beziehungsweise Wohnbereichs ermöglicht. Die App zeigt dem Nutzer dabei vorzugsweise den zu reinigenden Bereich als Umgebungskarte sowie jegliche Hindernisse an.

Ein Staubsammelbehälter ist insbesondere ein Behälter, der geeignet ist, Staub zu sammeln, aufzunehmen, zu behalten und/oder abzugrenzen. Beispielsweise ist ein Staubsammelbehälter ein Behälter oder eine Box, in der im Betriebsmodus der aufgesaugte Staub gesammelt wird, beziehungsweise der im Betrieb mit dem aufgesaugten Staub befüllt wird, bis ein maximaler Befüllungsgrad erreicht ist. Der maximale Befüllungsgrad kann dem Nutzer als Signal ausgegeben werden, sodass dieser den Staubsammelbehälter entnehmen und insbesondere leeren kann.

Unter einem Gerätegehäuse ist insbesondere das äußere Gehäuse des Geräts zu verstehen, dass das Gerät nach außen hin abschließt. Im Inneren des Gerätegehäuses befindet sich also das Innenleben des Geräts. Die Detektionseinrichtung überragt das Gerätegehäuse, beispielsweise in vertikaler Richtung, insbesondere in z-Richtung. Beispielsweise ist die Detektionseinrichtung auf einer Oberseite in einem mittigen Bereich des Gerätegehäuses angeordnet.

Unter einer Detektionseinrichtung ist jegliche Einrichtung zu verstehen, die dazu geeignet ist, Hindernisse bevorzugt zuverlässig zu detektieren. Diese ist vorzugsweise sensorbasiert, laserbasiert und/oder kamerabasiert. Vorzugsweise ist die Detektionseinrichtung ein LIDAR-Sensor und/oder ein Laserturm, der seine Umgebung in einer horizontalen Ebene durch eine 360°-Rotation abtastet beziehungsweise abscannt. Insbesondere werden von der Detektionseinrichtung in gleichmäßigen Intervallen Messstrahlen, insbesondere Laserstrahlen, ausgesendet, die für eine Entfernungsmessung Verwendung finden. Die Rotation der Detektionseinrichtung erfolgt um eine Drehachse, insbesondere um eine z-Achse, relativ zum Gerätegehäuse und wird durch einen Motor ausgeführt.

Unter einer horizontalen Ebene ist insbesondere jegliche Ebene zu verstehen, die parallel zu einer Bodenfläche und in horizontaler und/oder waagerechter Richtung verläuft. Insbesondere verläuft die horizontale Ebene parallel zur Oberseite des Gerätegehäuses. Vorzugsweise liegt die horizontale Ebene in geringem Abstand, also knapp über der Oberseite des Gerätegehäuses.

Unter einem Abdeckelement ist insbesondere ein Teil des Gerätegehäuses zu verstehen, das sich in einen offenen und einen geschlossenen Zustand befinden kann, und das insbesondere ein Innenleben des mobilen, selbstfahrenden Geräts abdeckt. Beispielsweise deckt das Abdeckelement den Staubsammelbehälter ab und ermöglicht dem Nutzer das Herausnehmen beziehungsweise das Einsetzen des Staubsammelbehälters aus dem Gerät beziehungsweise in das Gerät. Das Abdeckelement ist zum Beispiel mittels Scharnieren an dem benachbarten Gerätegehäuse befestigt, sodass es zum Öffnen und Schließen von einer horizontalen Position in eine senkrechte Position beweglich ist. Horizontal und senkrecht ist dabei in Relation zu der Oberseite des Gerätegehäuses zu verstehen.

Unter einem Fahrmanöver ist insbesondere jegliche geplante Fahrbewegung zu verstehen, die als Ziel das selbstständige Schließen des Abdeckelements beinhaltet. Dies kann beispielsweise eine Beschleunigungsbewegung, eine Bremsbewegung und/oder eine Drehbewegung sein. Das Fahrmanöver wird dabei vorzugsweise ruckartig, abrupt beziehungsweise schnell ausgeführt, um eine Schließbewegung des Abdeckelements einzuleiten und zu unterstützen.

Bei einer vorteilhaften Ausführungsform wird das Fahrmanöver nutzerunabhängig durchgeführt. Insbesondere ist kein Nutzereingriff notwendig. Bei detektiertem offenen Abdeckelement wird vom Gerät automatisch das Fahrmanöver ausgeführt, ohne dass ein Nutzer hierfür einen Befehl und/oder seine Zustimmung geben muss. Das Gerät arbeitet hierbei also eigenständig.

Bei einer weiteren vorteilhaften Ausführungsform ist das Abdeckelement eine Abdeckklappe über einem zu leerenden Staubammelbehälter. Das Gerät detektiert also mit der zur Navigation und Hinderniserkennung vorhandenen Detektionseinrichtung, ob die Abdeckklappe über dem Staubsammelbehälter vom Nutzer offengelassen wurde. Ohne Zutun des Nutzers versucht das Gerät mittels des vorgegebenen Fahrmanövers, diese Klappe zu schließen, womit die Detektionseinrichtung wieder einen für die Navigation und Hinderniserkennung vollständigen Sichtbereich zur Verfügung hat.

Bei einer weiteren vorteilhaften Ausführungsform ist die Detektionseinrichtung ein Lidar-Sensor. Dieser ist so auf dem Gerät platziert, dass der Lidar-Sensor eine horizontale Ebene knapp über dem Gerät abscannt, beispielsweise eine Ebene circa 10 mm über der Oberseite des Gerätegehäuses. Das Abdeckelement über dem Staubsammelbehälter des Geräts ist insbesondere zentral beziehungsweise mittig auf dem Gerät angeordnet und liegt somit ebenfalls in jenem Bereich, der vom Lidar-Sensor erfasst wird. Messstrahlen des Lidar-Sensors können das Abdeckelement nicht durchdringen. Ein geöffnetes Abdeckelement behindert daher die Scanebene des Lidar-Sensors nach vorne, wodurch das Gerät zwar das Abdeckelement prinzipiell erfassen und detektieren kann, jedoch hinter dem Abdeckelement liegende Hindernisse nicht erfasst.

Insbesondere nimmt der Lidar-Sensor in einem Bereich von beispielsweise 1 cm Entfernung und mit einer Auflösung von zum Beispiel 1° Messwerte auf. Für ein beispielsweise 20 bis 25 cm langes Abdeckelement in einer Entfernung von etwa 20 cm ergeben sich ausreichend Messpunkte, insbesondere 50 Messpunkte oder mehr, um das Abdeckelement zuverlässig detektieren und von anderen Hindernissen oder Objekten unterscheiden zu können.

Vorzugsweise ist vor dem Fahrmanöver sicherzustellen, dass der Lidar-Sensor das Abdeckelement erfasst hat, und nicht einen anderen Gegenstand, den der Nutzer zum Beispiel auf dem Gerät platziert hat. Nach der Detektion zumindest eines Hindernisses im Bereich des Gerätegehäuses wird dazu eine Lage des detektierten Hindernisses in Relation zum Abdeckelement bestimmt. Es wird also geprüft, ob Messpunkte, die deutlich im Bereich des Geräteumfangs und somit nicht in der umliegenden Umgebung des Geräts liegen, der Position des Abdeckelements zuzuordnen sind, insbesondere bezüglich dessen Abstand, Länge und relativer Lage.

Bei einer weiteren vorteilhaften Ausführungsform wird beim Bestimmen der Lage in Relation zum Abdeckelement ein Toleranzbereich insbesondere um die Position des geöffneten Abdeckelements berücksichtigt. Der Toleranzbereich wird insbesondere eingeführt, um eine Messungenauigkeit von beispielsweise +/- 1 cm bei Messentfernungen von unter 1 m des Lidar-Sensors zu berücksichtigen. Nur Messpunkte innerhalb des Toleranzbereichs werden dem Abdeckelement zugeordnet. Sind ausreichend Messpunkte nachweisbar, wird von einem geöffneten Abdeckelement ausgegangen. Insbesondere werden Messpunkte der Detektionseinrichtung in dem Toleranzbereich dem Abdeckelement und außerhalb des Toleranzbereichs anderen Hindernissen zugeordnet.

Ein Modellieren der gemessenen Kante mittels Methode der kleinsten Abweichungsquadrate, beispielsweise ein Least-Squares-Fitting zu einer Linie, kann zur Erkennung des Abdeckelements als solches zusätzlich Verwendung finden. Alternativ oder zusätzlich können die Messpunkte über die Zeit geprüft werden. Beispielsweise liegen nach etwa 0,2 Sekunden weitere Messpunkte der Detektionseinrichtung vor. Sind diese ähnlich zu den vorher ermittelten Messpunkten, wird davon ausgegangen, dass ein geöffnetes Abdeckelement detektiert wurde.

Von allen Lidar-Messpunkten oder von zumindest einer definierten Auswahl, die in Richtung des Abdeckelements zeigen, werden insbesondere jene, die einen Messwert jenseits des Geräteumfangs aufweisen, den Navigationsalgorithmen zugeführt, um dort für die Lokalisierung und/oder der Umgebungskartenerstellung genutzt werden zu können. Die innerhalb des Geräteumfangs liegenden Messwerte werden darauf geprüft, ob sie im definierten Toleranzbereich um das offene Abdeckelement liegen. Nicht im Toleranzbereich liegende Messpunkte werden verworfen, da in diesen Bereichen kein Objekt vorhanden sein sollte, oder dafür genutzt, um herauszufinden, ob der Nutzer einen Gegenstand auf dem Gerät positioniert hat.

Bei einer weiteren vorteilhaften Ausführungsform ist ein weiterer Sensor vorhanden, der bestimmt, ob ein Staubsammelbehälter im mobilen, selbstfahrenden Gerät eingesetzt ist, oder nicht. Es ist möglich, dass der Nutzer den Staubsammelbehälter des Geräts während der Abarbeitung eines Reinigungsauftrags aus dem Gerät herausnimmt und entleert. Wird kein Staubsammelbehälter im Gerät erkannt, beispielsweise mittels einem Mikroschalter oder einem Reed-Kontakt, ist es nicht sinnvoll, dass das Gerät trotz detektiertem offenen Abdeckelement eine Aktion, insbesondere das Fahrmanöver, durchführt. Nur falls der Staubsammelbehälter im Gerät detektiert wird und das Abdeckelement zeitgleich offensteht, ist die Durchführung des Reinigungsauftrags tatsächlich behindert und das Gerät unternimmt Gegenmaßnahmen, insbesondere das vorgesehene Fahrmanöver.

Bei einer weiteren vorteilhaften Ausführungsform wird ein Nutzer visuell und/oder per Audioausgabe über ein offenes Abdeckelement informiert. Insbesondere wird in diesem Fall ein manuelles Schließen angefragt, beispielsweise per Benachrichtigung in der App oder mittels einer Sprachausgabe mittels Lautsprecher.

Bei einer weiteren vorteilhaften Ausführungsform umfasst das Fahrmanöver ein Beschleunigungsmanöver, durch das ein Impuls in das Abdeckelement eingeleitet wird, sodass dieses zufällt. Insbesondere wird das Gerät unter Nutzung der Fahrantriebe in die Lage versetzt, spezielle Fahrmanöver durchzuführen, zum Beispiel ein schnelles Beschleunigungsmanöver, durch das der Impuls in das Abdeckelement eingeleitet wird, so dass dieses von alleine zufällt.

Bei einer weiteren vorteilhaften Ausführungsform ist in einem oberen Bereich des Abdeckelements ein Gewicht angeordnet. Durch das Gewicht wird insbesondere der Impuls beim Beschleunigen beziehungsweise beim Fahrmanöver auf das Abdeckelement verstärkt, wodurch sich insbesondere mit Vorteil ein zuverlässiges Zufallen des Abdeckelements ergibt.

Beim Fahrmanöver ist insbesondere vorteilhaft, dass das Gerät ausreichend Platz für das vorgesehene Fahrmanöver hat und beispielsweise keine Hindernisse in seiner Umgebung vorhanden sind. Um dies sicherzustellen, prüft das Gerät mit dem verbliebenen Sichtbereich der Detektionseinrichtung seine Umgebung. Insbesondere führt das mobile, selbstfahrende Gerät vor dem Fahrmanöver eine Umgebungsdetektion durch, um sicherzustellen, dass für das Fahrmanöver ausreichend Raum zur Verfügung steht. Ist ein Fahren des Geräts nach hinten oder ein Drehen des Geräts nicht möglich, so kann beispielsweise ein Bumper des Geräts als weiterer Sensor nach vorne genutzt werden, um zu testen, ob in der näheren Umgebung genügend Freiraum für das Fahrmanöver verfügbar ist. Ist kein Platz für ein entsprechendes Fahrmanöver vorhanden, so kann beispielsweise der Nutzer zur Hilfe gerufen und/oder darüber informiert werden.

Die Erfindung wird anhand der nachfolgenden, lediglich Beispiele darstellenden Ausführungen der Erfindung näher erläutert. Es zeigen:
- Figuren 1a, 1c:: jeweils eine schematische Ansicht eines Ausführungsbeispiels eines mobilen, selbstfahrenden Geräts zum Betrieb eines erfindungsgemäßen Verfahrens,
- Figuren 1b, 1d, 2a, 2c:: jeweils ein schematischer Querschnitt eines Ausführungsbeispiels eines mobilen, selbstfahrenden Geräts zum Betrieb eines erfindungsgemäßen Verfahrens,
- Figuren 2b, 2d, 3:: jeweils eine schematische Aufsicht auf ein Ausführungsbeispiel eines mobilen, selbstfahrenden Geräts zum Betrieb eines erfindungsgemäßen Verfahrens, und
- Figuren 4, 5: jeweils ein Ablaufdiagramm betreffend ein Ausführungsbeispiel eines erfindungsgemäßen Verfahrens zum Betrieb eines mobilen, selbstfahrenden Geräts.

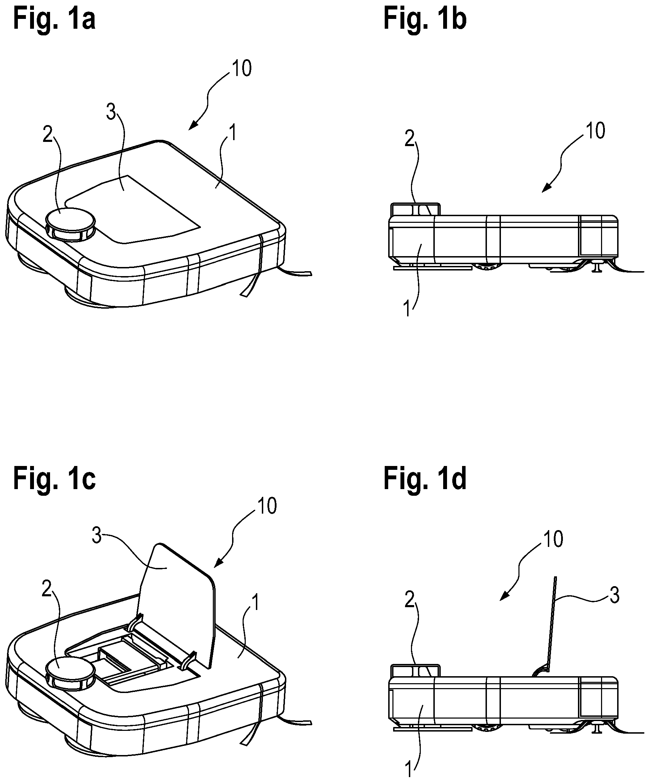

Figur 1 zeigt ein Ausführungsbeispiel eines mobilen, selbstfahrenden Geräts 10 in einer schrägen Seitenaufsicht beziehungsweise einer Seitenansicht. Das Gerät 10 ist ein Saugroboter, der ein Gerätegehäuse 1 und eine Detektionseinrichtung 2 aufweist. Die Detektionseinrichtung 2 ist ein Lidar-Sensor, der auf einer Oberseite des Gehäuses 1 in einem mittigen, hinteren Bereich angebracht ist. Die Detektionseinrichtung 2 scannt zur Navigation des Geräts 10 eine horizontale Ebene parallel zur Oberseite des Gehäuses 1 ab. Auf der Oberseite des Geräts befindet sich ein Abdeckelement 3, insbesondere eine Abdeckplatte, die von einer geschlossenen Position in der Oberseite des Gehäuses 1 in eine offene Position geklappt werden kann. Die Abdeckplatte ist insbesondere nach oben aufklappbar. Hierfür ist die Abdeckplatte beispielsweise über Scharniere an einer Seite an dem Gehäuse 1 befestigt. Die Figuren 1a, 1b zeigen das Gerät 10 mit geschlossenem Abdeckelement 3, die Figuren 1c, 1d stellen das Gerät 10 mit offenem Abdeckelement 3 dar.

Das Abdeckelement 3 ist über einem Staubsammelbehälter, insbesondere einer Staubbox, angeordnet. Um die Staubbox aus dem Gerät 10 entnehmen und entleeren zu können, öffnet ein Nutzer das Abdeckelement 3, indem dieses in eine im Wesentlichen senkrechte Position gebracht wird und auf diese Weise einen Zugriff auf die Staubbox ermöglicht (Figuren 1c, 1d). Nach dem Entleeren und/oder Säubern der Staubbox setzt der Nutzer diese wieder in das Gerät 10 und schließt das Abdeckelement 3, indem dieses in seine horizontale Position heruntergeklappt wird (Figuren 1a, 1b).

Ist das Abdeckelement 3 in seiner offenen Position, schränkt diese den Sichtbereich des Lidar-Sensors 2 ein und verhindert insbesondere, dass Objekte und Hindernisse vor dem Saugroboter erkannt werden können. Dadurch steigt die potenzielle Gefahr von Navigationsfehlern und Kollisionen mit Hindernissen.

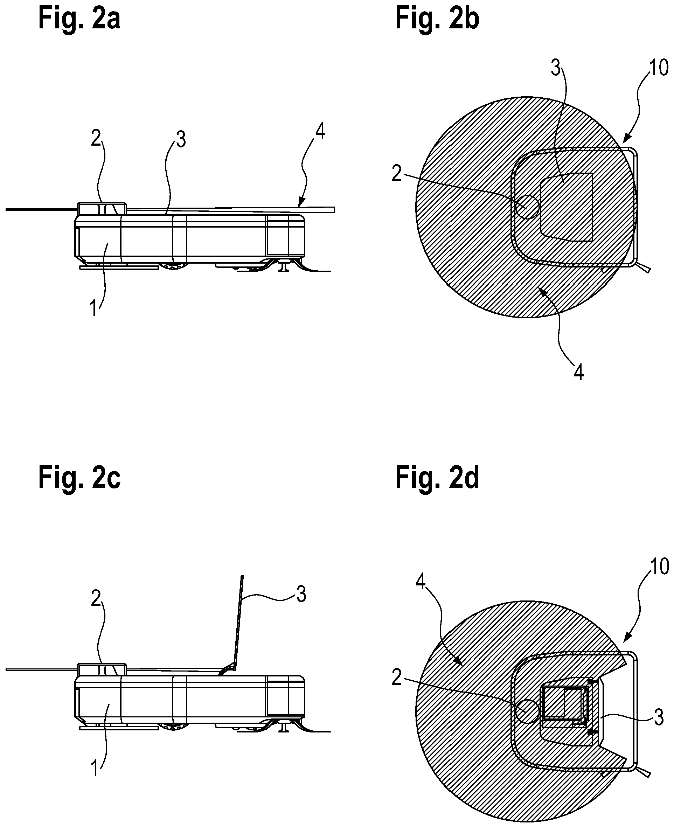

Die Figuren 2a, 2b zeigen die Detektionseinrichtung 2 im Betrieb mit einem geschlossenen Abdeckelement 3. Der Lidar-Sensor gibt Messstrahlen 4 in einem 360° Sichtfeld ab. Die Messstrahlen werden hierbei in der horizontalen Ebene parallel zur Oberseite des Geräts 10 ausgesandt. Bei dem geschlossenen Abdeckelement 3 ist eine Detektion im vollständigen 360° Sichtfeld des Lidar-Sensors möglich. Eine Sichtbehinderung durch das Abdeckelement 3 ist nicht gegeben.

Ist das Abdeckelement 3 dagegen geöffnet, behindert dieses das Sichtfeld des Lidar-Sensors im Bereich des Abdeckelements 3. Dies zeigen die Figuren 2c, 2d. Bei geöffnetem Abdeckelement 3 durchdringt dieses die Messstrahlen des Lidar-Sensors und blockiert diese, sodass eine Detektion hinter dem Abdeckelement 3 verhindert wird. Ein Fahren des Saugroboters mit aktiver Kollisionsvermeidung ist so nicht möglich.

Vorliegend wird der Lidar-Sensor neben der Navigation nun dazu genutzt, ein offenes Abdeckelement 3 zu detektieren. Bei offenem Abdeckelement leitet das Gerät 10 ein Verfahren ein, bei dem der Saugroboter ohne Eingriff von außen eigenständig versucht, das Abdeckelement durch ein geeignetes Fahrmanöver zu schließen und so seine volle Funktionsfähigkeit bezüglich des Detektionsbereichs des Lidar-Sensors wiederherzustellen. Der Saugroboter detektiert also das offene Abdeckelement ohne dedizierten Sensor und leitet anschließend selbstständig eine Prozedur zum Schließen ein.

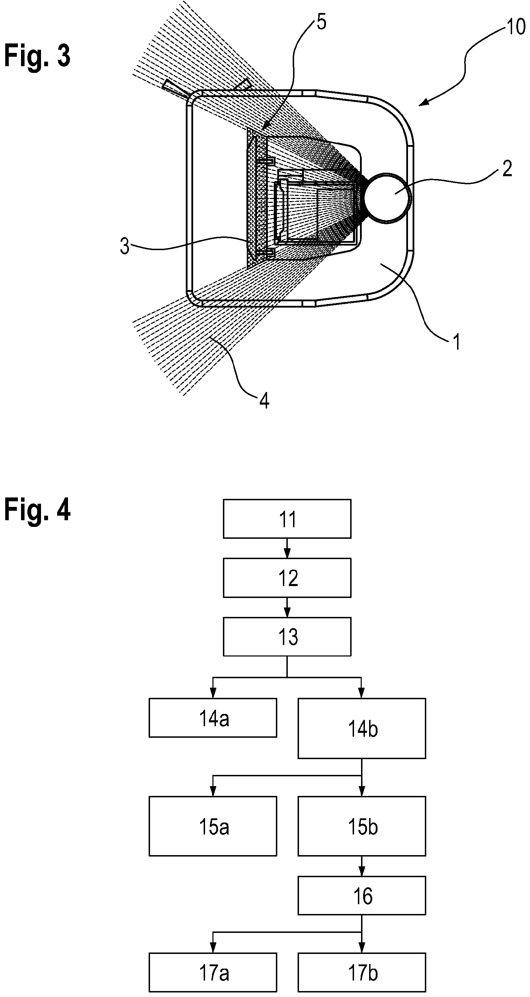

Um sicherzugehen, dass das Abdeckelement als offen von dem Lidar-Sensor erfasst wird, und nicht ein anderer Gegenstand, der beispielsweise vom Nutzer auf das Gerätegehäuse des Saugroboters gelegt wurde, wird vom Gerät geprüft, ob detektierten Messpunkte, die im Bereich des Geräteumfangs und somit nicht in der umliegenden Umgebung liegen, der Position des Abdeckelements in Abstand, Länge und Lage zuzuordnen sind. Hierbei wird die Messungenauigkeit von beispielsweise +/- 1 cm bei Messentfernungen von < 1 m des Lidar-Sensors berücksichtigt, indem ein Toleranzbereich 5 um die Position des geöffneten Abdeckelements 3 festgelegt wird. Nur Messpunkte innerhalb des Toleranzbereichs 5 werden vom Gerät 10 dem Abdeckelement 3 zugeordnet. Sind ausreichend Messpunkte nachweisbar, wird von einem geöffneten Abdeckelement ausgegangen. Dies ist in Figur 3 grafisch dargestellt.

Ein Modellieren der gemessenen Kante des Abdeckelements 3 mittels Methode der kleinsten Abweichungsquadrate (Least-Squares-Fitting zu einer Linie) kann das zuverlässige Erkennen des Abdeckelements unterstützen. Um die Richtigkeit der Detektion sicherzustellen, kann das Ergebnis zusätzlich über die Zeit geprüft werden. Beispielsweise liegen nach einer bestimmten Zeit, zum Beispiel 0,2 Sekunden, weitere Messwerte vor. Sind diese ähnlich zu den vorher ermittelten Daten, ist davon auszugehen, dass ein geöffnetes Abdeckelement vorliegt.

Der Lidar-Sensor detektiert Messwerte jenseits des Geräteumfangs. Diese werden den Navigationsalgorithmen zugeführt, um dort für die Lokalisierung und/oder der Kartenerstellung genutzt zu werden. Die innerhalb des Geräteumfangs liegenden Messwerte werden darauf geprüft, ob sie im definierten Toleranzbereich um das offene Abdeckelement liegen. Nicht im Toleranzbereich liegende Messpunkte werden verworfen oder genutzt, um zu prüfen, ob ein Gegenstand auf dem Gerät positioniert ist. Zudem ist zu prüfen, ob der Staubsammelbehälter im Gerät eingesetzt ist oder nicht. Hierfür kann ein beispielsweise Mikroschalter, ein Reed-Kontakt oder eine Lichtschranke Verwendung finden.

Figur 4 zeigt ein derartiges Ablaufdiagramm für die Prüfung des Saugroboters, ob ein geöffnetes Abdeckelement erkannt wurde. Im ersten Schritt 11 befindet sich der Saugroboter im aktiven Reinigungsmodus. Es werden einzelne Messwerte über den Lidar-Sensor erfasst (Schritt 12). Anschließend prüft der Saugroboter, ob die jeweiligen Messwerte innerhalb des Geräteumfangs liegen (Schritt 13). Liegen diese außerhalb, werden die detektierten Messwerte in die Navigation zugeführt (Schritt 14a). Liegen die Messwerte dagegen innerhalb des Geräteumfangs, wird im Schritt 14b geprüft, ob die Messwerte innerhalb des Toleranzbereichs um das Abdeckelement liegen. Liegen diese außerhalb des Toleranzbereichs, werden die entsprechenden Messwerte verworfen oder es wird geprüft, ob ein Gegenstand auf dem Saugroboter liegt (Schritt 15a). Liegen die Messwerte innerhalb des Toleranzbereichs, wird im Schritt 15b geprüft, ob eine Mindestanzahl an Messwerten für die Detektion des Abdeckelements vorhanden ist. Anschließend wird geprüft, ob der Staubsammelbehälter mittels zugehörigem Sensor detektiert werden kann (Schritt 16). Wird kein Staubsammelbehälter detektiert, wird keine weitere Aktion durchgeführt (Schritt 17a). Kann ein Staubsammelbehälter detektiert werden, startet die Prozedur zum automatischen Schließen des Abdeckelements (Schritt 17b).

Die Prozedur zum automatischen Schließen beinhaltet insbesondere ein spezielles Fahrmanöver des Saugroboters, zum Beispiel ein schnelles Beschleunigungsmanöver, unter Nutzung der Fahrantriebe, wodurch ein Impuls in das Abdeckelement eingeleitet wird, sodass dieses zufällt. Um dieses Zufallen zu unterstützen, kann im obersten Bereich des Abdeckelements ein Gewicht eingebaut sein, sodass beim Beschleunigen der Impuls auf das Abdeckelement verstärkt wird. Für das Fahrmanöver ist ausreichend Platz in der Umgebung des Saugroboters notwendig. Insbesondere sollten keine Hindernisse in der Nähe des Saugroboters sein. Hierzu prüft das Gerät mit dem verbliebenen Sichtbereich des Lidar-Sensors seine Umgebung. Ist ein Fahren nach hinten oder ein Drehen des Saugroboters nicht möglich, so kann ein Bumper als verbleibender Sensor nach vorne genutzt werden, um zu testen, ob in der näheren Umgebung genug Freiraum verfügbar ist.

Gelangt das Gerät während seiner Prüfung an den Punkt, dass nicht genug Platz für ein entsprechendes Fahrmanöver vorhanden ist, wird der Nutzer zu Hilfe gerufen, indem ein manuelles Schließen angefragt wird, damit der Reinigungsauftrag fortgeführt und erfolgreich beendet werden kann.

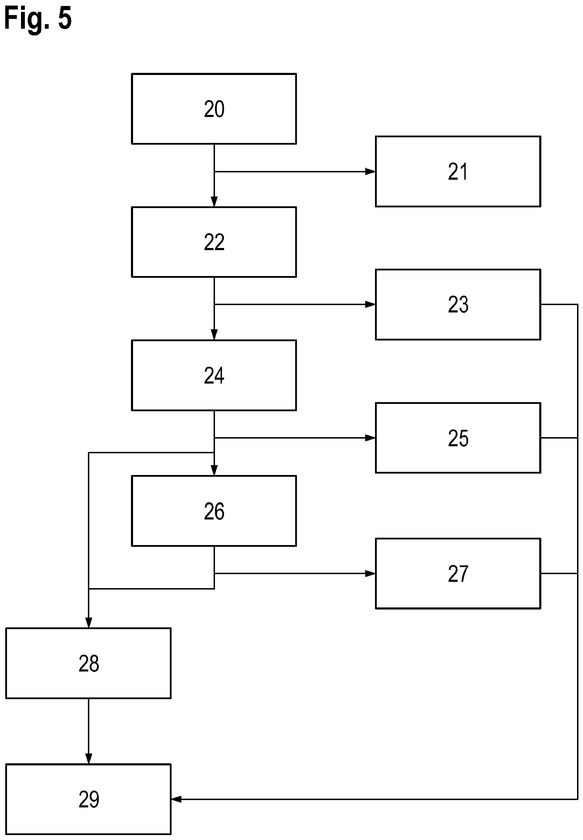

In Figur 5 ist ein Ablaufdiagramm für die Prozedur des selbstständigen Schließens eines offenen Abdeckelements gezeigt. In Schritt 20 startet der Saugroboter das Manöver zum selbstständigen Schließen des Abdeckelements. Optional informiert das Gerät in Schritt 21 den Nutzer zusätzlich, dass das Manöver zum Schließen des Abdeckelements durchgeführt wird beziehungsweise werden muss. In Schritt 22 prüft das Gerät, ob seine Umgebung hinter dem Saugroboter genügend Platz für das Manöver bietet.

Ist genug Platz vorhanden, fährt das Gerät eine definierte Strecke rückwärts und beschleunigt anschließend abrupt nach vorne (Schritt 23). War das Schließen erfolgreich, wird der Reinigungsauftrag ausgeführt (Schritt 29). Ist für das Manöver dagegen nicht genug Platz vorhanden, dreht sich das Gerät im Schritt 24 auf der Stelle und prüft dadurch, ob seine Umgebung in zumindest einer Richtung um den Saugroboter genügend Platz für das Manöver bietet.

Ist nicht genug Platz für das Manöver vorhanden, startet das Gerät eine Anfrage an den Nutzer zum manuellen Schließen des Abdeckelements, damit der Reinigungsauftrag ausgeführt werden kann (Schritt 28), womit nach dem manuellen Schließen der Reinigungsauftrag fortgeführt wird (Schritt 29). Ist dagegen genug Platz vorhanden, richtet sich der Saugroboter in die Richtung mit genügend Platz aus und beschleunigt anschließend abrupt nach vorne (Schritt 25). Nach dem erfolgreichen Schließen des Abdeckelements wird der Reinigungsauftrag ausgeführt (Schritt 29).

Stellt das Gerät alternativ fest, dass nicht genug Platz zum Drehen vorhanden ist, tastet sich das Gerät mittels seines Bumpers langsam vorwärts, um zu prüfen, ob seine Umgebung in zumindest einer Richtung um den Saugroboter genügend Platz für das Manöver bietet (Schritt 26). Ist genug Platz vorhanden, richtet sich der Saugroboter in die Richtung mit genügend Platz aus und beschleunigt anschließend abrupt nach vorne (Schritt 27). Nach dem erfolgreichen Schließen des Abdeckelements wird der Reinigungsauftrag ausgeführt (Schritt 29). Stellt das Gerät mittels des Bumpers dagegen fest, dass nicht genügend Platz für das Manöver vorhanden ist, erfolgt eine Anfrage an den Nutzer, das Abdeckelement manuell zu schließen, damit der Reinigungsauftrag ausgeführt werden kann (Schritt 28). Nach dem Schließen des Abdeckelements wird der Reinigungsauftrag fortgeführt (Schritt 29).

Mit dem erfindungsgemäßen Verfahren wird der bereits zur Navigation vorhandene Lidar-Sensor genutzt, um das offene Abdeckelement zu erkennen. Hierfür sind vorteilhafterweise keine weiteren zusätzlichen Sensoren an dem Abdeckelement nötig. Diese eingesparte Sensorik reduziert mit Vorteil den Herstellungspreis des Geräts, die Komplexität des Systems und die Montagezeit. Insbesondere kann das Gerät ein offenes Abdeckelement selbst detektieren und selbstständig schließen, ohne dass der Nutzer anwesend und aktiv werden muss. Dies erhöht mit Vorteil die Autonomie des Systems.

## Patentansprüche

1. Verfahren zum Betrieb eines mobilen, selbstfahrenden Geräts (10), insbesondere Bodenreinigungsgeräts wie ein Saug- und/oder Kehr- und/oder Wischroboter, bei dem eine zur Navigation vorgesehene Detektionseinrichtung (2) eingesetzt wird, ein auf einem Gerätegehäuse (1) des mobilen, selbstfahrenden Geräts (10) angeordnetes Abdeckelement (3) als offen oder geschlossen zu ermitteln, wobei das mobile, selbstfahrende Gerät (10) bei einem offenen Abdeckelement (3) ein Fahrmanöver zum selbstständigen Schließen des Abdeckelements (3) durchführt.

2. Verfahren nach einem der vorhergehenden Ansprüche, wobei das Fahrmanöver nutzerunabhängig durchgeführt wird.

3. Verfahren nach einem der vorhergehenden Ansprüche, wobei das Abdeckelement (3) eine Abdeckklappe über einem zu leerenden Staubsammelbehälter ist.

4. Verfahren nach einem der vorhergehenden Ansprüche, wobei die Detektionseinrichtung (2) ein Lidar-Sensor ist.

5. Verfahren nach einem der vorhergehenden Ansprüche, wobei zum Ermitteln des Abdeckelements (3) als offen oder geschlossen zumindest ein Hindernis im Bereich des Gerätegehäuses (1) detektiert, und eine Lage des detektierten Hindernisses in Relation zum Abdeckelement (3) bestimmt wird.

6. Verfahren nach Anspruch 5, wobei beim Bestimmen der Lage in Relation zum Abdeckelement (3) ein Toleranzbereich (5) um das Abdeckelement (3) berücksichtigt wird.

7. Verfahren nach Anspruch 6, wobei Messpunkte der Detektionseinrichtung (2) in dem Toleranzbereich (5) dem Abdeckelement (3) und außerhalb des Toleranzbereichs (5) anderen Hindernissen zugeordnet werden.

8. Verfahren nach einem der vorhergehenden Ansprüche, wobei ein weiterer Sensor vorhanden ist, der bestimmt, ob ein Staubsammelbehälter im mobilen, selbstfahrenden Gerät (10) eingesetzt ist.

9. Verfahren nach einem der vorhergehenden Ansprüche, wobei das Fahrmanöver ein Beschleunigungsmanöver umfasst, durch das ein Impuls in das Abdeckelement (3) eingeleitet wird, sodass dieses zufällt.

10. Verfahren nach einem der vorhergehenden Ansprüche, wobei in einem oberen Bereich des Abdeckelements (3) ein Gewicht angeordnet ist.

11. Verfahren nach einem der vorhergehenden Ansprüche, bei dem das mobile, selbstfahrende Gerät (10) vor dem Fahrmanöver eine Umgebungsdetektion durchführt, um sicherzustellen, dass für das Fahrmanöver ausreichend Raum zur Verfügung steht.

12. Verfahren nach einem der vorhergehenden Ansprüche, wobei ein Nutzer visuell und/oder per Audioausgabe über das offene Abdeckelement (3) informiert wird.

## Claims

1. Method for operating a mobile, self-propelled device (10), in particular floor cleaning device such as a suction and/or dusting and/or wiping robot, with which a detection facility (2) provided for navigation is used to determine a cover element (3) arranged on a device housing (1) of the mobile self-propelled device (10) as open or closed, wherein the mobile, self-propelled device (10) carries out a driving manoeuvre to automatically close the cover element (3) when a cover element (3) is open.

2. Method according to one of the preceding claims, wherein the driving manoeuvre is carried out independently of a user.

3. Method according to one of the preceding claims, wherein the cover element (3) is a cover flap above a dust collection container to be emptied.

4. Method according to one of the preceding claims, wherein the detection facility (2) is a Lidar sensor.

5. Method according to one of the preceding claims, wherein at least one obstacle in the region of the device housing (1) is detected in order to determine the cover element (3) as open or closed and a position of the detected obstacle in relation to the cover element (3) is determined.

6. Method according to claim 5, wherein a tolerance range (5) around the cover element (3) is taken into account when the position is determined in relation to the cover element (3).

7. Method according to claim 6, wherein measuring points of the detection facility (2) are assigned to the cover element (3) in the tolerance range (5) and to other obstacles outside of the tolerance range (5).

8. Method according to one of the preceding claims, wherein a further sensor is available, which determines whether a dust collection container is used in the mobile, self-propelled device (10).

9. Method according to one of the preceding claims, wherein the driving manoeuvre comprises an acceleration manoeuvre by means of which a pulse is introduced into the cover element (3) so that this closes.

10. Method according to one of the preceding claims, wherein a weight is arranged in an upper region of the cover element (3).

11. Method according to one of the preceding claims, in which the mobile, self-propelled device (10) carries out environmental detection before the driving manoeuvre in order to ensure that sufficient space is available for the driving manoeuvre.

12. Method according to one of the preceding claims, wherein a user is informed of the open cover element (3) visually and/or by way of audio output.

## Revendications

1. Procédé de fonctionnement d'un appareil mobile automoteur (10), en particulier d'un appareil de nettoyage du sol tel qu'un robot aspirateur et/ou de balayage et/ou laveur de sol, dans lequel un dispositif de détection (2) prévu pour la navigation est utilisé, pour déterminer si un élément de recouvrement (3) disposé sur un boîtier d'appareil (1) de l'appareil mobile automoteur (10) est ouvert ou fermé, dans lequel l'appareil mobile automoteur (10) exécute, lorsque l'élément de recouvrement (3) est ouvert, une manoeuvre de conduite pour fermer automatiquement l'élément de recouvrement (3).

2. Procédé selon l'une des revendications précédentes, dans lequel la manoeuvre de conduite est exécutée indépendamment d'un utilisateur.

3. Procédé selon l'une des revendications précédentes, dans lequel l'élément de recouvrement (3) est une trappe d'obturation au-dessus d'un bac collecteur de poussière à vider.

4. Procédé selon l'une des revendications précédentes, dans lequel le dispositif de détection (2) est un capteur lidar.

5. Procédé selon l'une des revendications précédentes, dans lequel au moins un obstacle est détecté dans la région du boîtier d'appareil (1) pour déterminer si l'élément de recouvrement (3) est ouvert ou fermé, et une position de l'obstacle détecté est déterminée par rapport à l'élément de recouvrement (3).

6. Procédé selon la revendication 5, dans lequel, pour déterminer la position par rapport à l'élément de recouvrement (3), une plage de tolérance (5) autour de l'élément de recouvrement (3) est prise en considération.

7. Procédé selon la revendication 6, dans lequel des points de mesure du dispositif de détection (2) dans la plage de tolérance (5) sont affectés à l'élément de recouvrement (3), et en dehors de la plage de tolérance (5) à d'autres obstacles.

8. Procédé selon l'une des revendications précédentes, dans lequel un autre capteur est présent, qui détermine si un bac collecteur de poussière est inséré dans l'appareil mobile automoteur (10).

9. Procédé selon l'une des revendications précédentes, dans lequel la manœuvre de conduite comprend une manœuvre d'accélération, par laquelle une impulsion est déclenchée dans l'élément de recouvrement (3), de sorte que celui-ci se referme.

10. Procédé selon l'une des revendications précédentes, dans lequel un poids est disposé dans une région supérieure de l'élément de recouvrement (3).

11. Procédé selon l'une des revendications précédentes, dans lequel l'appareil mobile automoteur (10) effectue une détection des environs avant la manœuvre de conduite afin de s'assurer qu'un espace suffisant est disponible pour la manœuvre de conduite.

12. Procédé selon l'une des revendications précédentes, dans lequel un utilisateur est informé visuellement et/ou par une sortie audio au sujet de l'élément de recouvrement (3) ouvert.
